# EUROPEAN PATENT SPECIFICATION

(11) **EP 2 421 716 B1**
(45) Date of publication and mention of the grant of the patent: **07.06.2017**
(21) Application number: 10727825.1
(22) Date of filing: 20.04.2010
(51) Int. Cl.: B60C 9/20, B60C 9/18, B60C 1/00, B60C 9/28

(54) **HEAVY LOAD PNEUMATIC TIRE**
REIFEN FÜR RÄDER VON SCHWERLASTKRAFTWAGEN
PNEU POUR ROUES DE VÉHICULE POIDS LOURD

(30) Priority: 22.04.2009 IT MI20090683; 21.07.2009 US 213851
(43) Date of publication of application: 29.02.2012
(73) Proprietor: Pirelli Tyre S.p.A., 20126 Milano (IT)
(72) Inventor: MONTANARO, Fabio, I-20126 Milano (IT); MARTIN, Mario, I-20126 Milano (IT); RESMINI, Emiliano, I-20126 Milano (IT); ASCANELLI, Alessandro, I-20126 Milano (IT)
(74) Representative: Longoni, Alessandra
(86) International application number: PCT/IB2010/000874
(87) International publication number: WO 2010/122396

(56) References cited:
- EP-A1- 0 557 101
- EP-A1- 1 470 937
- EP-A1- 1 489 102
- EP-A2- 0 280 442
- WO-A1-2006/066602
- US-B1- 6 401 781

## Description

### FIELD OF THE INVENTION

The present invention relates to a tyre for heavy load vehicle wheels, such as lorries, buses, trailers and in general for vehicles where the tyre is subject to a heavy load.

### PRIOR ART

In general, a tyre typically comprises a carcass structure having side edges respectively associated with bead structures, each typically comprising at least one bead wire and at least one bead filler.

A belt structure comprising one or more belt layers is associated with the carcass structure in a radially outer position.

A tread band is applied in a radially outer position with respect to the belt structure.

Respective sidewalls are also applied on the side surfaces of the carcass structure, each extending from one of the side edges of the tread band up to the respective bead structure.

The tread band of a tyre typically comprises a central annular portion situated astride the equatorial plane of the tyre and two annular shoulder portions disposed on axially opposite sides with respect to the aforementioned central annular portion and separated from the latter by respective circumferential recesses.

The tread band may also comprise a plurality of recesses and/or sipes disposed circumferentially and transversely so as to define a tread pattern, which is therefore formed by parts separated from each other by grooves.

The terms "recesses" and "sipes" are understood as meaning grooves formed in the tread band of the tyre, the sipes having a width smaller than the width of the recesses.

The parts of the tread band separated by the recesses and/or sipes comprise a contact surface, intended to come into contact with the road surface (contact patch) during the rolling movement, and side faces which define the recesses and/or sipes. The intersection between each side face and the contact surface forms an edge, which facilitates contact of the tyre with the road surface.

In the tread band, the transverse recesses and/or sipes assist the traction and the initial propulsion provided by the front gripping surfaces defined on the tread band. These transverse recesses and/or sipes also help ensure lateral drainage of the water in the event of a wet road surface.

On the other hand, the circumferential recesses, which are larger in size, influence the behaviour of the tyre in terms of steering and lateral stability. The circumferential recesses also influence elimination of the water in the longitudinal direction from the contact patch of the tyre during travel on a wet road surface, reducing the risk of aquaplaning.

Typically, among the parts of the tread pattern, the circumferential recesses define a plurality of circumferential elements which are called "ribs" and which may be divided into blocks by the transverse sipes or recesses.

EP 1988120 A1 considers the problem of providing a tyre with a tread band of the "cap and base" type, the use of which makes it possible to reduce oil consumption in the future, but at the same time improve the rolling resistance, directional stability and strength of the elastomeric material, with favourable results when compared to a tyre produced using a tread or underlayer composition, comprising mainly materials derived from petroleum resources. The general problem considered in EP 1988120 A1 relates to the recent growing interest in environmental protection issues - in which motor vehicles also play an important part - and the consequent increasingly severe regulations governing CO₂ emissions. Moreover, since petroleum resources are limited with supplies decreasing from year to year, oil prices are expected to increase in the coming years. Therefore, restrictions are being imposed on the use of materials derived from petroleum resources, such as synthetic rubbers and carbon black.

According to EP 1988120 A1 the solution to this problem lies in a tyre having a tread band, which has a cap and base design and comprises a radially inner layer, or tread base, and a radially outer layer, or tread cap. The tread base is made using an elastomeric composition comprising from 25 to 80 parts per weight of silica relative to 100 parts by weight of an elastomer comprising natural rubber, and the thickness of this tread base is from 17% to 50% of the overall thickness of the tyre tread. According to EP 1988120 A1, the amount of silica is not greater than 80 parts by weight, and preferably not greater than 75 parts by weight, relative to 100 parts by weight of the elastomer contained in the tread base composition, so as not to increase the rolling resistance, negatively affect the processability and cause defects in the finished product. In turn, the elastomeric composition of the tread cap comprises an elastomer, silica, silane, carbon black and an oil. According to EP 1988120 A1, the amount of silica in the tread cap must preferably be not less than 50 parts by weight, more preferably 60 parts by weight, relative to 100 parts by weight of the elastomer contained in the tread cap composition. In fact, again according to EP 1988120 A1, when the amount of silica is less than 50 parts by weight, there is a tendency for the abrasion resistance to deteriorate. With regard to carbon black, according to EP 1988120 A1, it is preferable for it to be present in the tread cap in an amount not greater than 5 parts by weight relative to 100 parts by weight of the elastomer contained in the tread cap composition, in order to reduce the impact on the environment and be prepared for the future in the event of a shortage of oil supplies.

EP 1 489 102 discloses a natural rubber obtained by a deproteinizing treatment of a natural rubber latex and having a total nitrogen content of from 0.12% to 0.30% w/w. Said natural rubber is used to produce a rubber composition and a pneumatic tire, particularly tire case members and tire treads, and shows an improved processability, low hysteresis loss properties and improved abrasion resistance.

EP1 470 937 discloses a rubber composition for mechanically and thermally highly stressed areas of rubber products, in particular for the belt area and the bead area of pneumatic vehicle tires having good belt and/or bead durability. Said rubber composition contains a microdispersion of syndiotactic 1,2-polybutadiene in cis-1,4-polybutadiene and a reinforcing filler such as silica.

With specific reference to tyres for heavy load vehicle wheels, their characterization may be made depending on their intended use. In particular, the structure of these tyres is designed to allow the tyres to withstand enormous loads, much higher than those, which can be withstood by car wheel tyres.

Moreover, typically, these tyres can be classified as directional tyres or tractional tyres. The former, which are mainly intended to be mounted on the steering axles of a heavy load vehicle, have substantially continuous circumferential ribbing with, at the most, thin transverse sipes. The latter, which are intended to transmit the propulsive power of the vehicle to the ground, have ribbing which is divided into blocks (or plugs) in order to improve the traction and the initial propulsion.

A further category of tyres for heavy load vehicles is that intended for articulated-lorry trailers, which must withstand huge loads while maintaining the direction imparted by the engine unit and are not intended to provide traction and initial propulsion. These tyres may therefore typically be compared (in terms of design) to directional tyres.

One problem which may arise in heavy load vehicle tyres is the occurrence, in particular in the vicinity of the end zones of the belt structure, of separations of the layers forming the belt structure and/or between of the belt structure and the carcass structure, resulting in the tyre inevitably being discarded since no longer fit for use.

Moreover, in particular in the shoulder region of the tyre, which is typically subject to continuous small slipping movements on the asphalt, early wear, resulting in possible irregular wear of the tread band, may occur.

The international patent application PCT WO 2006/066602 A1, in the name of the same Applicant, describes a tyre for heavy load vehicles comprising at least two inserts which are made using a vulcanised elastomeric material and applied in a radially outer position with respect to the belt structure, in the vicinity of the axially outer edges of this belt structure. The vulcanised elastomeric material has a dynamic elastic modulus (E'), measured at 70° C, which is less than 7 Mpa. The Applicant has established that this tyre has good characteristics in terms of structural integrity of the belt structure as well as improved and uniform tread wear.

EP 1557294 A1 describes a tread for heavy load vehicle tyres made using an elastomeric composition containing at least two different types of carbon black. The problem considered in EP 1557294 A1 relates to heavy load vehicle tyres having relatively thick cross-sectional treads (5 cm or more) which typically are subject to a significant increase in the heat produced and a corresponding increase in the operating temperature when the tyre is in operation underneath a vehicle. According to that stated in EP 1557294 A1, the use of two different types of carbon black is able to improve the thermal conductivity path for heat dissipation.

JP 2004-161862 A describes an elastomeric composition for an under-belt filling of a heavy load vehicle tyre. As explained in JP 2004-161862, the under-belt filling is an element disposed between the end of the belt and the carcass of the tyre. The elastomeric composition of the under-belt filling comprises from 30 to 35 parts by weight relative to 100 parts by weight of an elastomeric component of a silica-containing inorganic reinforcing filler with a BET surface area of between 110 and 180 m²/g. This composition is said to resolve the problem of deterioration due to heat fatigue and reduction in the physical properties of the vulcanised elastomer. According to JP 2004-161862 A, it is preferable for the amount of silica to be greater than 5 parts by weight relative to 100 parts by weight of elastomeric component, more preferably from 10 to 35 parts by weight and even more preferably from 15 to 25 parts by weight. Moreover, preferably the inorganic reinforcing filler should comprise, in addition to silica, also carbon black, in an amount not greater than 25 parts by weight relative to 100 parts by weight of elastomeric component, more preferably from 5 to 20 parts by weight and even more preferably from 10 to 20 parts by weight.

EP 1780238 A1, the inventor of which is the same of the aforementioned JP 2004-161862 A, describes an elastomeric composition for an under-belt filling element comprising carbon black and resorcinol. According to EP 1780238 A1, this composition is able to eliminate exothermic heating and deterioration of the physical properties of the rubber of the under-belt filling. As explained in EP 1780238 A1, the need to improve the working life of a tyre and the abrasion resistance of the tread, together with the tendency for an increase in the width of the tread band, meant that there was an urgent need for a drastic improvement in the fatigue resistance of the under-belt filling. It was therefore necessary to adopt a composition which had excellent properties in terms of hardness, elongation at breakage after ageing, etc., with regard to the under-belt filling, while maintaining the directional stability. According to EP 1780238 A1, the elastomeric composition described in JP 2004-161862 A, comprising specific quantities of silica and carbon black, was unable to maintain sufficiently the tensile properties when subject to ageing.

### SUMMARY OF THE INVENTION

For some time in the industrial sector of heavy load vehicle tyres there has been a trend towards the production of tyres, which, for the same size, have larger tread widths. This change has come about in order to meet the market demands of users who appear to regard a tyre with a wider tread as being more reliable.

Indeed, the Applicant has noted that a greater tread width (compared to a tyre of the same nominal size, but with a smaller tread width) results in an improved behaviour and better response of the tyres during driving, as well as greater comfort.

With the use of wider treads it was also expected that there would be an improvement in terms of number of kilometres travelled and tyre integrity, owing to the presence of a greater surface area of elastomeric material over which the forces and wear can be distributed.

On the contrary, the Applicant has surprisingly noted that an increase, for the same nominal size, in the tread width in fact resulted in a significant increase in the number of cases where the integrity of the tyres was not guaranteed even after a small number of kilometres travelled. In particular, the integrity of the tyres was jeopardized by separations in the end zones of the belt, despite the presence of inserts between the ends of the belt and the tread band, such as those described in the aforementioned patent application PCT WO 2006/066602 A1 in the name of the same Applicant.

The Applicant has been able to solve the aforementioned problem by providing a tyre for heavy load vehicles, comprising an insert interposed between the belt structure and tread band, at least at each end of the belt structure, and made using an elastomeric composition comprising a diene rubber and at least one reinforcing filler, where the reinforcing filler comprises almost exclusively silica.

The Applicant has in fact established in various tests that these tyres have exceptional characteristics in terms of structural integrity and fatigue resistance.

The Applicant has also surprisingly discovered that the tyres which have the aforementioned insert comprising almost exclusively silica reach, during the rolling travel, an overall operating temperature which is substantially lower than that of corresponding tyres comprising inserts made with different compounds.

This finding, as will be shown in some examples provided in the description below, is of particular significance. It is surprising in that this result is achieved substantially without modifying the overall structure of the tyre and moreover without reducing, by an equally significant amount, the hysteresis characteristics of the said inserts interposed between the ends of the belt structure and the tread band, compared to the inserts already described in the aforementioned patent application WO 2006/066602 A1.

Without wishing to be limited to only one particular interpretation, the Applicant considers that there may be a correlation between the significantly lower operating temperature of the tyre thus designed and its improved structural integrity also where particularly wide treads are used, owing to a lesser tendency for heat decay of the elastomeric materials forming the tyre during the rolling movement. In particular, it is considered that the lower operating temperature reduces greatly the probability of detachments and separations of the belt structure and tread band in the end zone of the belt structure itself, where most of the stresses generated during rolling travel appear to be concentrated.

The Applicant has also noted that the reduction in operating temperature, which can be achieved by the tyre according to the invention, also results in an improvement in the rolling resistance characteristics of the tyre, with a considerable improvement also in the number of kilometres travelled.

Although this result has been obtained on the basis of an increase in the width of the tread band, the Applicant considers that the solution according to the present invention may also advantageously be used when the tread thickness is increased and/or, more generally, whenever a tread band containing a significant volume of compound is provided. Alternatively or in combination, the Applicant considers that the solution according to the present invention may provide significant advantages where compounds, which are particularly hysteretic or rich in carbon black, are used for the tread band.

According to a first aspect, the present invention relates to a tyre for heavy load vehicles wheels.

The tyre typically comprises a carcass structure comprising at least one carcass ply. The carcass ply comprises reinforcing cords. The ends of said carcass ply are associated with respective bead structures.

The tyre also comprises a belt structure disposed in a radially outer position with respect to said carcass structure.

In one embodiment, said belt structure comprises radially outwardly:
- at least a first belt layer comprising reinforcing cords disposed according to a first direction forming a first angle with respect to an equatorial plane of the tyre;
- at least a second belt layer comprising reinforcing cords disposed according to a second direction forming a second angle with respect to the equatorial plane of the tyre, said second angle being opposite to said first angle;
- at least a third belt layer comprising reinforcing cords disposed according to a third direction forming a third angle with respect to the equatorial plane of the tyre, said third angle being of at least 10° in absolute value.

The tyre also comprises a tread band disposed in a radially outer position with respect to said belt structure.

At least two inserts are also disposed between respective axial ends of said belt structure and said tread band.

Each of said inserts comprises a first portion tapered towards the equatorial plane of said tyre.

Each of said inserts also comprises a second portion tapered towards an axis of rotation of said tyre.

Each of said inserts is also made of a first vulcanised elastomeric material comprising a diene polymer and an amount of reinforcing filler.

Such amount of reinforcing filler comprises at least 70% of silica. Preferably, the amount of reinforcing filler in said first elastomeric material comprises at the most 20% of carbon black.

The amount of reinforcing filler of said first vulcanised elastomeric material is preferably equal to at least about 25 phr.

In particular, the amount of reinforcing filler of said first vulcanised elastomeric material comprises at least about 20 phr of silica.

Said tread band is made of a second vulcanised elastomeric material typically comprising a diene polymer and an amount of reinforcing filler.

In a preferred embodiment, the amount of reinforcing filler of said second vulcanised elastomeric material comprises at least 70% of carbon black.

In particular the amount of reinforcing filler in said second elastomeric material is preferably equal to at least about 40 phr. In a preferred embodiment, the second elastomeric material comprises at least about 35 phr of carbon black.

Advantageously, the inserts may be disposed substantially symmetrically with respect to the equatorial plane of said tyre.

Moreover, said inserts preferably have a thickness not less than 10% of the thickness of said tread band. This thickness value refers to a measurement performed in a radial direction in the portion of tyre at any of the axial ends of the tread band, in particular the portion of the tread band intended to make contact with the ground.

Even more preferably, the thickness of each of said inserts is between 20% and 150% of the thickness of said tread band.

The two inserts may be linked together by means of a layer made of said first vulcanised elastomeric material so as to form an axially continuous layer radially interposed between said belt structure and said tread band.

In preferred embodiments, the belt structure comprises at least one pair of lateral strips comprising reinforcing cords disposed substantially in a direction parallel to the equatorial plane of said tyre. Each strip of said pair of lateral strips may be disposed at any respective axial end of said belt structure.

In this embodiment, the inserts may be respectively radially superimposed to said pair of lateral strips.

In this embodiment, the third layer of said belt structure may be at least partially radially superimposed to said pair of lateral strips.

The tyres for heavy load vehicles wheels must be able to withstand heavy loads. Typically, for this purpose, the reinforcing cords of the carcass structure and the belt structure are metallic reinforcing cords.

The first vulcanised elastomeric material is formed using a first elastomeric composition comprising an N-alkyl pyrrolidone derivative having the formula (I): 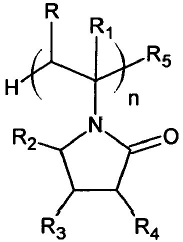
wherein R, R₁, R₂, R₃, R₄ and R₅, being equal or different from each other, represent a hydrogen atom, or an alkyl group C₁-C₂₀, or R and R₁, linked together, form a cyclic structure of 5 or 6 carbon atoms or still, R and R₁ are combined together to form a double bond;
and wherein n is equal to 1 or, if greater than 1, represents the number of monomeric units of the corresponding N-alkyl pyrrolidone polymer.

In particular, the first elastomeric composition may preferably comprise an amount of said N-alkyl pyrrolidone derivative of formula (I) of between about 0.1 phr and about 15 phr, and preferably between about 1 phr and about 5 phr.

For the purposes of the present invention, the term "phr" indicates the parts by weight of a given component of the elastomeric composition per 100 parts of elastomeric polymer.

### BRIEF DESCRIPTION OF THE FIGURES

Further characteristic features and advantages of the present invention will emerge more clearly from the following detailed description of a number of embodiments of a tyre according to the present invention, provided with reference to the accompanying drawings. In these drawings:
- Figure 1 shows a cross-sectional view of a portion of the tyre according to the invention in accordance with a first embodiment;
- Figure 2 shows a cross-sectional view of a portion of the tyre according to the invention in accordance with a second embodiment.

### DETAILED DESCRIPTION OF EMBODIMENTS OF THE INVENTION

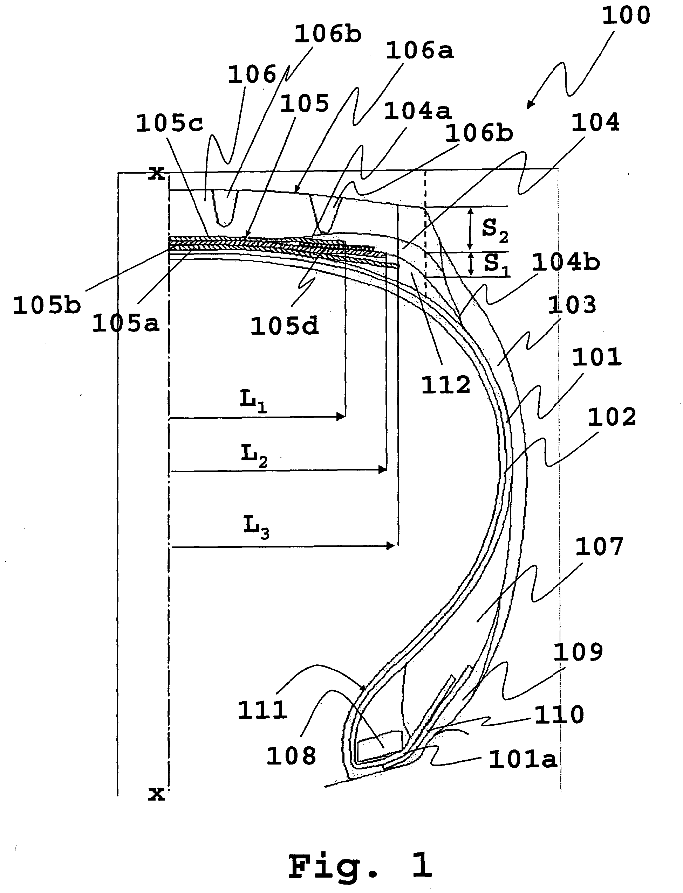

In Figures 1 and 2, 100 denotes in its entirety a tyre for vehicle wheels according to the present invention, in particular a tyre intended for use on wheels of heavy load vehicles.

The expression "heavy load vehicle" is understood generally to indicate a vehicle belonging to the categories M2-M3, N1∼N3 and 02-04 defined in "Consolidated Resolution of the Construction of Vehicles (R.E.3) (1997)", Annex 7, pages 52-59, "Classification and definition of power-driven vehicles and trailers", such as lorries, trucks, tractors, buses, vans and other vehicles of this type.

Typically, tyres for wheels of heavy load vehicles are required to support a considerable weight, which is normally indicated on the side of the tyre expressed as a so-called "load index", which represents the maximum load which can be withstood by the tyre inflated to a nominal pressure (also indicated on the side). For example, tyres for heavy load vehicle wheels may typically have a load index of at least 121 (as defined by the standards of the European Tyre and Rim Technical Organisation - E.T.R.T.O), which corresponds to a weight of 1450 kg. This result is obtained by means of a suitable choice of the structural parameters of the tyres, for example in terms of the number of carcass plies and/or density of the cords within the carcass ply or plies, and/or in terms of the number of layers in the belt structure and/or density of the cords included within the layers of the belt structure, and/or of the breakage load of the cords and/or of the rubberised fabrics used in the carcass ply or plies and in the layers of the belt structure, as well as the operating pressure which, for this type of use, typically is higher than 4-5 bar. Moreover, this type of tyres is mounted on large-size rims, i.e. typically at least 16 to 17-inch rims for tyres for light-truck use and/or at least 17.5 to 22.5-inch rims for truck use.

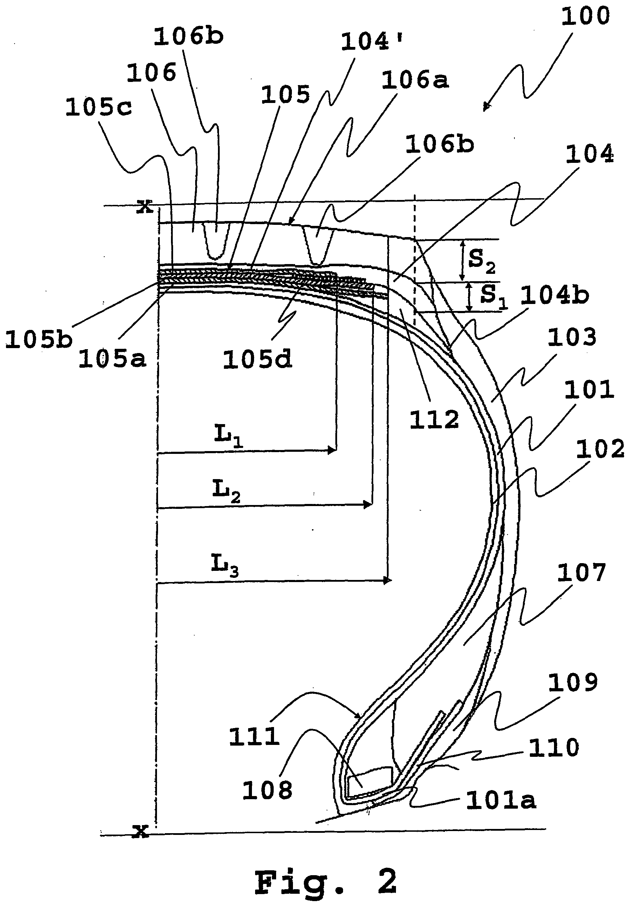

For greater clarity, Figure 1 and Figure 2 show only a portion of the tyre 100, the remaining portion (not shown) being identical and symmetrically disposed with respect to the equatorial plane x-x of the tyre.

The tyre 100 includes a carcass structure comprising at least one carcass ply 101, the lateral ends of which are associated with respective bead structures. These bead structures comprise at least one bead wire 108 and a bead filler 107. In the drawings shown in Figures 1 and 2, the carcass ply 101 and the bead wire 108 are associated by means of back-folding of the ends of the carcass ply 101 around the bead wire 108 so as to form the so-called "ply back-fold" 101 a.

Alternatively, the conventional bead wire 108 may be replaced by a structure consisting of annular inserts formed by rubberised filaments in a spiral arrangement (not shown in Figures 1 and 2). In this case, the carcass ply is not back-folded around these annular inserts, but the joint is obtained by fixing the ends of the carcass ply between the same annular inserts (see, for example, the patent applications EP 928680 and EP 928702).

The carcass ply 101 generally comprises a plurality of reinforcing elements disposed parallel to each other and at least partially coated with a layer of vulcanised elastomeric material. These reinforcing elements are usually metallic cords comprising filaments (typically made of steel), tied together and coated with a metal alloy (for example copper/zinc, zinc/manganese, zinc/molybdenum/cobalt and/or the like). For some applications it is possible to use textile cords instead of metallic cords, for example cords made of rayon, nylon and/or polyethylene terephthalate (PET).

The carcass ply 101 is typically of the radial type, i.e. incorporates reinforcing elements disposed substantially in the direction perpendicular to the circumferential direction (according to radial planes of the tyre 100, i.e. planes containing the axis of rotation of the tyre 100).

The bead wire 108 typically comprises metallic filaments and/or cords. In a preferred embodiment, the bead wire 108 is formed by means of a successive wound turns of a steel element, which has a substantially hexagonal cross-section. As mentioned above, the bead wire 108 is enclosed inside a bead 111, which is defined along a radially inner end of the tyre 100, by which the tyre makes contact with a respective rim (not shown in Figures 1 and 2). The space defined by the ply back-fold 101a contains the bead filler 107, typically made using the vulcanised elastomeric material.

An anti-abrasive band 109 is usually disposed in an axially outer position with respect to the ply back-fold 101a, so as to protect the tyre 100 in the area where it makes contact against the rim.

A reinforcing layer 110 may be wound around the bead wire 108 and the bead filler 107, so as to surround them at least partially. Other metallic and/or textile reinforcements (not shown in Figures 1 and 2) may be disposed in an axially inner and/or outer position with respect to the ply back-fold 101a. A belt structure 105 is applied along the circumference of the carcass ply 101. In the embodiment according to Figures 1 and 2, the belt structure 105 comprises two belt layers 105a and 105b which are radially superimposed to each other (usually known as "supporting belts") and incorporating a plurality of reinforcing elements, typically metallic cords. These reinforcing elements are substantially parallel to each other within each layer and intersect with the elements of the adjacent layer, having an angle of inclination (of opposite sign in the two layers), relative to the equatorial plane of the tyre 100, typically having a width comprised between 10° and 40°, preferably between 12° and 30° in absolute value. The reinforcing elements are typically coated with vulcanised elastomeric material.

In the embodiment according to Figures 1 and 2 the belt structure 105 comprises a lateral reinforcing strip 105d. The strip 105d can be radially superimposed to the second supporting belt 105b, at an axial end thereof. The lateral strip 105d incorporates a plurality of reinforcing elements, preferably high-elongation metallic cords having an elongation at break value of between 3% and 10%, preferably between 3.5% and 7%. These reinforcing elements are disposed substantially in the circumferential direction, forming an angle of a few degrees (less than 5°) with respect to a plane parallel to the equatorial plane x-x of the tyre 100. The reinforcing elements of the strip 105d are typically coated with vulcanised elastomeric material.

The reinforcing strip 105d can be formed by means of a single strip of elastomeric material comprising the reinforcing elements and wound in a spiral with turns radially superimposed to each other (for example two complete turns). Alternatively, the reinforcing strip 105d can be formed by means of a strip of elastomeric material having a width smaller than the width of the strip 105d itself, comprising reinforcing elements and wound in a spiral with turns axially adjacent to each other.

Moreover, the belt structure 105 typically comprises a third belt layer 105c. This belt layer 105c, which is usually referred to by the name "stone-deflector belt", is the radially outermost layer of the belt structure 105 and acts as a protective layer against the penetration of stones and/or grit into the innermost layers of the structure of the tyre 100. In the embodiment according to Figures 1 and 2, the stone-deflector belt layer 105c is radially superimposed to the second supporting belt 105b. This third layer 105c also comprises reinforcing elements, typically metallic cords. These reinforcing elements are disposed parallel to each other and inclined with respect to the equatorial plane of the tyre 100 at an angle typically greater than 10° (in absolute value). Preferably, this angle of inclination is between 10° and 70°, and more preferably between 12° and 40°. The reinforcing elements of the third layer 105c are typically coated with vulcanised elastomeric material.

Preferably, in the belt layers 105a and/or 105b and/or 105c and/or 105d, the reinforcing cords have a density from 30 cords/dm to 80 cords/dm, and preferably from 40 cords/dm to 65 cords/dm.

In the embodiment according to Figures 1 and 2, the axial width of the belt structure 105 is determined by the axial width L₃ of the first belt layer 105a, measured between its ends parallel to the axis of rotation of the tyre 100. Preferably, the maximum width of the belt structure 105 is equal to at least 90% of the axial width of the tread band 106. Moreover, in the embodiment according to Figures 1 and 2, the first belt layer 105a has an axial width L₃ greater than the axial width L₂ of the second belt layer 105b. In other words, the axial ends of the second belt layer 105b are in a position axially inset at a first predetermined distance from the corresponding axial ends of the first belt layer 105a. Preferably, the first predetermined distance is between 2 mm and 20 mm and more preferably between 5 mm and 10 mm.

In any case, it may be envisaged that the axial width L₃ of the first belt layer 105a is less than the axial width L₂ of the second belt layer 105b.

In the embodiment according to Figures 1 and 2, the axially outer lateral end of the lateral reinforcing strip 105d is inset towards the inside at a second predetermined distance from the axially outermost end of the second belt layer 105b. Preferably, the second predetermined distance is between 2 mm and 30 mm and more preferably between 5 mm and 10 mm.

In the embodiment according to Figures 1 and 2, the third belt layer 105c has an axial width L₁ smaller than both the axial width L₃ of the first belt layer 105a and the axial width L₂ the second belt layer 105b. Moreover, the axially outer end of the third belt layer 105c is in an axially inner position with respect to the outermost axial end of the reinforcing strip 105d. Preferably, the third belt layer 105c is partially superimposed to the reinforcing strip 105d with a portion of at least 3%, preferably between 10% and 95%, of the axial width of the reinforcing strip 105d.

The side-wall 103 of vulcanised elastomeric material, which extends from the bead 111 to the end of the belt structure 105, is applied in an axially outer position with respect to the carcass structure.

The tread band 106, the lateral ends of which are connected to the side-wall 103, is applied circumferentially in a radially outer position with respect to the belt structure 105. Externally, the tread band 106 has a rolling surface 106a intended to make contact with the ground. Typically, in tyres intended for mounting on steering axles and/or on trailers substantially only circumferential grooves 106b are formed on the rolling surface 106a. In tyres intended for mounting on tractional axles, in addition to the circumferential grooves 106b, transverse grooves (not shown in Figures 1 and 2) are also formed so as to define blocks, which may have different forms and/or sizes.

The tread band 106 is made of vulcanised elastomeric material, the characteristics of which provide the tyre 100 with the desired performance in terms of abrasion resistance and/or uniformity of wear and/or tear strength. These characteristics may be achieved by compounds, which comprise a relatively large amount of reinforcing filler and in particular are rich in carbon black. In a preferred embodiment, the amount of reinforcing filler is at least about 40 phr and more preferably at least about 60-70 phr. Preferably, the amount of reinforcing filler in the compound of the tread band 106 is less than 200 phr. Amounts of reinforcing filler greater than 200 phr can give rise to problems of processability and correct dispersion/incorporation within the compound in the case where an elastomeric matrix based on natural rubber is used. Preferably, at least 70% of the amount of reinforcing filler in the compound of the tread band 106 is composed of carbon black. For example, the compound of the tread band 106 can comprise at least about 35 phr and preferably at least 50 phr of carbon black. Preferably, the percentage of silica in the compound of the tread band 106 is not greater than 30% of the total amount of reinforcing filler. For example, the compound of the tread band may comprise a amount of silica less than about 20-25 phr.

Advantageously, the width of the tread band 106 may be equal to at least 80% of the dimension of the maximum cord in the tyre 100. Alternatively or in combination, the thickness S₂ of the tread band 106 (measured in a radial direction at the axial end of the portion 106a intended to make contact with the road surface, as shown in Figures 1 and 2) can be equal to at least 10 mm, with values which may typically reach a maximum of 40-45 mm.

In the case of a tubeless tyre 100, an elastomeric layer 102 which is substantially air-tight, usually known as a liner, can also be disposed inside the carcass structure.

An insert 104 is disposed substantially along the shoulder portion, i.e. the portion where the lateral end of the tread band 106 is connected to the side-wall 103. In particular, the insert 104 has a portion 104a, which is interposed substantially in a radial direction between the belt structure 105 and the tread band 106 and a portion 104b, which is interposed substantially in an axial direction between the carcass 101 and the side-wall 103.

The portion 104a, which is interposed between the belt structure 105 and the tread band 106, is tapered substantially in an axial direction towards the equatorial plane x-x of the tyre 100. The portion 104b which is interposed between the carcass 101 and the side-wall 103 is tapered substantially in a radial direction towards the axis of rotation of the tyre 100.

Preferably, the thickness S₁ of the insert 104 (measured in a radial direction at the axial end of the portion 106a of the tread band intended to make contact with the road surface) is equal to at least 10%, preferably between 20% and 150%, of the thickness S₂ of the tread band 106.

The insert 104 is made of vulcanised elastomeric material. This elastomeric material comprises a certain amount of reinforcing filler, at least 70% of which is composed of silica. For example, the elastomeric material of the insert 104 can comprise at least about 25 phr of reinforcing filler, of which at least about 20 phr of silica. Preferably, the amount of reinforcing filler is less than 200 phr. Amounts of reinforcing filler greater than 200 phr can give rise to problems of processability and correct dispersion/incorporation within the compound in the case where an elastomeric matrix based on natural rubber is used. In preferred embodiments, the amount of silica in the elastomeric material of the insert 104 is between about 20 phr and 100 phr and more preferably between about 20 and 80 phr. Preferably, the amount of reinforcing filler in the elastomeric material of the insert 104 comprises at the most 30%, more preferably at the most 20% of carbon black (for example not more than about 10 to 15 phr).

In a preferred embodiment, the elastomeric composition from which the insert 104 is prepared comprises an N-alkyl pyrrolidone derivative having the formula: 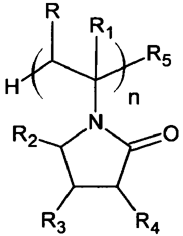
wherein R, R₁, R₂, R₃, R₄ and R₅, being equal or different from each other, represent a hydrogen atom, or an alkyl group C₁-C₂₀, or R and R₁, linked together, form a cyclic structure of 5 or 6 carbon atoms or still, R and R₁ are combined together to form a double bond;
and wherein n is equal to 1 or, if greater than 1, represents the number of monomeric units of the corresponding N-alkyl pyrrolidone polymer.

In a preferred embodiment, an N-alkyl pyrrolidone derivative in which R₁, R₂, R₃, R₄ and R₅ are hydrogen atoms is used.

In particular, an N-alkyl pyrrolidone derivative in which R₁, R₂, R₃, R₄ and R₅ are hydrogen atoms and R represents an alkyl group C₆-C₁₀ can be preferably used.

Specific examples of N-alkyl pyrrolidone derivatives which can be used in the elastomeric composition from which the insert 104 is made are N-ethyl-2-pyrrolidone (marketed for example under the tradename NEP®), N-cyclohexyl-2-pyrrolidone (marketed for example under the tradename CHP®), N-octyl-2-pyrrolidone (marketed for example under the tradename Surfadone® LP-100), N-dodecyl-2-pyrrolidone (marketed for example under the tradename Surfadone® LP-300), polyvinylpyrrolidone (PVP) and alkylated polyvinylpyrrolidones (marketed for example under the tradename Ganex®).

Particularly preferred is N-octyl-2-pyrrolidone.

In particular, the elastomeric composition may comprise an amount of the aforementioned N-alkyl pyrrolidone derivative in an amount of between 0.1 phr and about 15 phr, preferably between about 1 phr and about 5 phr.

In particular, the Applicant has found that the addition of this ingredient in elastomeric compositions, which are particularly rich in silica, is able to improve significantly the processability of the said elastomeric composition. With regard to production of the insert 104, an improved processability of the elastomeric composition advantageously allows to obtain a semi-finished product with controlled characteristics and dimensions, which are within limited nominal design ranges.

Moreover, the Applicant considers that the addition of this ingredient facilitates better dispersion of the silica within the elastomeric matrix, thus obtaining an improvement in terms of efficiency in the action of the reinforcing filler, with particular reference to a reduction in the hysteretic contribution on the part of the insert 104.

In the embodiment shown in Figure 2, a layer 104' is interposed between the belt structure 105 and the tread band 106 also on the inside (in the axial direction) of the insert 104, so as to form, together with the inserts 104, a continuous shoulder-to-shoulder layer. The elastomeric material of the layer 104' disposed in the central zone of the tyre 100 is preferably the same as the elastomeric material of the inserts 104 disposed along the shoulders. The thickness of the layer 104' is, however, preferably smaller than the thickness S₁ of the insert 104: for example, the maximum thickness of the layer 104' may be preferably as high as 6-7 mm, this thickness being measured radially along the equatorial plane x-x of the tyre 100.

A further insert 112, usually called "under-belt insert" made of vulcanised elastomeric material, is interposed between the carcass 101 and the belt structure 105, so as to support the end of said belt structure 105 in the shoulder zone of the tyre 100.

The tyre 100 in Figure 1 or 2 may be made using any process known in the art. Typically, a conventionally used process envisages the preparation of the various aforementioned components of the tyre 100 in the form of green semi-finished articles, assembly of the semi-finished articles on one or more preparation drums so as to form a green tyre and moulding and vulcanisation of the green tyre in a special mould provided in a vulcanisation press.

In particular, it may be preferably envisaged that the tread band 106 and the inserts 104 (and if necessary the layer 104') are made by means of coextrusion.

### Examples

Two different series of directional and tractional tyres of size 315/80R22.5, having the structure shown in Figure 1, were prepared by the Applicant. The two series differed in terms of the elastomeric material used for the inserts 104.

Table 1 shows the composition of the elastomeric material of the inserts 104 used in the tyres of the first series (reference tyre). As can be noted, this elastomeric material comprised a significant amount of reinforcing filler (about 30 phr of carbon black + 14 phr of silica), with a marked prevalence of carbon black.

**Table 1 (reference tyre)**

| **Ingredient** | **Amount (phr)** |
|---|---|
| Natural rubber (SMR) | 100 |
| Silica (Zeosil® 1165 MP - Rhodia) | 14 |
| Carbon black (N326) | 30 |
| Silane (X50S® - Evonik) | 2 |
| Stearic acid (STEARINA N - Sogis) | 2 |
| Wax (Antilux® 654 - Lanxess) | 1 |
| Zinc oxide (Rhenogran® ZnO-80 - RheinChemie) | 3.3 |
| 6-PPD (Santoflex® 13 - Monsanto) | 1 |
| TBBS (Vulkacit ® NZ/EG-C-Bayer) | 1.2 |
| CTP (Vulkalent ® G-Bayer) | 0.1 |
| Soluble sulphur (Flexsys) | 2.5 |

Table 2 shows the composition of the elastomeric material of the inserts 104 used in the tyres of the second series (tyre according to invention). As can be noted, this elastomeric material comprised a significant amount of reinforcing filler (about 44 phr of silica + about 10 phr of carbon black, including the portion of 50% represented by silane X50S®), with a marked prevalence of silica.

**Table 2 (tyre according to invention)**

| **Ingredient** | **Amount (phr)** |
|---|---|
| Natural rubber (STR20) | 100 |
| Silica (Zeosil® 1165 MP - Rhodia) | 44.3 |
| Carbon black (N550) | 6.5 |
| Silane (X50S® - Evonik) | 7 |
| N-octyl-2-pyrrolidone (Surfadone LP100® - ISP) | 2 |
| Stearic acid (STEARINA N - Sogis) | 2 |
| Paraffin oil (Catenex SNR - Shell) | 1 |
| Zinc oxide (Rhenogran® ZnO-80 - RheinChemie) | 3.6 |
| 6-PPD (Santoflex® 13 - Monsanto) | 1.9 |
| TBBS (Vulkacit® NZ/EG-C-Bayer) | 1.8 |
| CTP (Vulkalent® G-Bayer) | 0.1 |
| Soluble sulphur (Flexsys) | 2.6 |

In order to evaluate the dynamic properties of the elastomeric materials shown in Tables 1 and 2, test pieces with a cylindrical shape (length 25 mm; diameter 12 mm) were prepared and vulcanised (for 30 minutes at a temperature of 151°C). These test pieces were subject to pre-loading, until 20% longitudinal deformation with respect to their initial length occurred, as well as - while keeping them at a predefined temperature (70°C) for the entire duration of the tests - sinusoidal dynamic stressing at a frequency of 100 Hz and amplitude of ±7.5% with respect to the length prior to pre-loading. By means of this test, the dynamic elastic modulus (E'), the dynamic viscous modulus (E") and the tanδ value, i.e. the ratio between the dynamic viscous modulus and the dynamic elastic modulus, were measured.

In particular, the dynamic tests performed gave a tanδ value for the compounds shown in Tables 1 and 2 of 0.066 and 0.057, respectively, i.e. a small (albeit appreciable) reduction in hysteresis for the compound in Table 2 compared to the compound in Table 1 was established.

The compound used for the tread band (identical for both series of tyres) was a compound particularly hysteretic, rich in carbon black (70 phr) and without silica, so as to produce a good result in terms of number of kilometres travelled and high tear strength.

Various indoor and outdoor tests were carried out on the two series of tyres in order to evaluate their duration and fatigue strength.

During a first session, a high-speed indoor test was carried out on the tyres of the first series (reference tyre, insert 104 with compound according to Table 1) and the tyres of the second series (tyre according to invention, insert 104 with compound according to Table 2). During this test, each tyre was loaded and inflated to nominal load and pressure values, respectively, and mounted on a road wheel rotated at an initial preset speed, with the speed being increased at predetermined time intervals of a few hours until substantial destruction of the tyre occurred. During the high-speed tests the operating temperature of the tyres undergoing the tests, i.e. the temperature of the air in the tyres, was also measured.

Table 3 below shows the results obtained. With regard to the results for duration during the high-speed test, a reference value of "100" was used for the first series. The operating temperature shown in Table 3 is the temperature measured at 90 km per hour (only on directional tyres).

**Table 3**

| | **Series 1 (reference tyre)** | | **Series 2 (tyre according to invention)** | |
|---|---|---|---|---|
| | Directional | Tractional | Directional | Tractional |
| **Duration** | 100 | 100 | 100 | 121 |
| **Temperature (°C)** | 86 | - | 82 | - |

During a second session, a test for measuring the rolling resistance, in accordance with the ISO standard 18164:2005, was carried out on the tyres of the first series (reference tyre, insert 104 with compound according to Table 1) and the tyres of the second series (tyre according to invention, insert 104 with compound according to Table 2). In this case also the operating temperature of the tyres during the test was measured.

Table 4 below shows the results obtained. With regard to the coefficient value for the rolling resistance a reference value of "100" was used for the first series of tyres.

**Table 4**

| | **Series 1 (reference tyre)** | | **Series 2 (tyre according to invention)** | |
|---|---|---|---|---|
| | Directional | Tractional | Directional | Tractional |
| **Rolling resistance** | 100 | 100 | 94 | 98 |
| **Temperature (°C)** | 72 | 74 | 65 | 72 |

During a third session, an outdoor test for duration under stress was carried out on the tyres of the first series (reference tyre, insert 104 with compound according to Table 1) and the tyres of the second series (tyre according to invention, insert 104 with compound according to Table 2). During this test, the tyres were mounted under a vehicle subject to a predetermined overload. The vehicle was driven on a road circuit at a constant speed for eight hours per day over the course of three weeks. In this case also the operating temperature of the tyres was measured (at a predetermined time during the day and at the same position along the road circuit).

Table 5 below shows the results obtained (directional tyres only). The temperature shown represents an average temperature recorded for the various laps performed.

**Table 5**

| | **Series 1 (reference tyre)** | **Series 2 (tyre according to invention)** |
|---|---|---|
| **Rolling resistance** | 100% out of order | 0% out of order |
| **Temperature (°C)** | 70 | 66 |

As can be immediately seen from the results shown in Tables 3, 4 and 5, following variation of the elastomeric material used for the inserts 104, the tyres according to the invention were superior to the reference tyres, both as regards the overall results of the duration and structural integrity tests and, in particular, as regards the operating temperatures obtained, which were significantly lower for the tyres according to the invention compared to the reference tyres. Advantages were determined both for the directional tyres and for the tractional tyres. It must be pointed out that this significant improvement was obtained against an - on the whole - fairly small reduction in the hysteresis characteristics of the compound used in the second series (Table 2) compared to the compound used in the first series (Table 1), this being confirmed by the small (albeit significant) improvement in the results for the rolling resistance.

## Claims

1. Tyre for heavyload vehicle wheels, comprising:
• a carcass structure comprising at least one carcass ply (101) comprising reinforcing cords and having ends associated with respective bead structures (111);
• a belt structure (105) disposed in a radially outer position with respect to said carcass structure, said belt structure radially outwardly comprising:
- at least a first belt layer (105a) comprising reinforcing cords disposed according to a first direction forming a first angle with respect to an equatorial plane of the tyre;
- at least a second belt layer (105b) comprising reinforcing cords disposed according to a second direction forming a second angle with respect to the equatorial plane of the tyre, said second angle being opposite to said first angle;
- at least a third belt layer (105c) comprising reinforcing cords disposed according to a third direction forming a third angle with respect to the equatorial plane of the tyre, said third angle being of at least 10° in absolute value;
• a tread band (106) disposed in radially outer position with respect to said belt structure;
• at least two inserts (104) disposed between respective axial ends of said belt structure (105) and said tread band (106), each of said inserts comprising a first portion being tapered towards the equatorial plane of said tyre and a second portion being tapered towards a rotation axis of said tyre, each of said inserts being formed with a first vulcanised elastomeric material comprising a diene polymer and an amount of a reinforcing filler,
**characterized in that**
said amount of reinforcing filler comprises at least 70% of silica and said first vulcanised elastomeric material is formed starting from a first elastomeric composition comprising an N-alkyl pyrrolidone derivative having general formula (I): 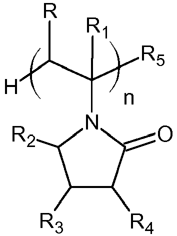
wherein R, R₁, R₂, R₃, R₄ and R₅, being equal or different from each other, represent a hydrogen atom, or an alkyl group C₁-C₂₀, or R and R₁, linked together, form a cyclic structure of 5 or 6 carbon atoms or still, R and R₁ are combined together to form a double bond;
and wherein n is equal to 1 or, if greater than 1, represents a number of monomeric units of the corresponding N-alkyl pyrrolidone polymer.

2. Tyre according to claim 1, wherein said tread band (106) is formed with a second vulcanised elastomeric material comprising a diene polymer and an amount of a reinforcing filler and in which said amount of a reinforcing filler of said second vulcanised elastomeric material comprises at least 70% of carbon black.

3. Tyre according to claim 1 or 2, wherein said amount of a reinforcing filler of said first elastomeric material comprises at most 20% of carbon black.

4. Tyre according to any one of the previous claims, wherein said amount of a reinforcing filler of said first vulcanised elastomeric material is at least 25 phr.

5. Tyre according to any one of the previous claims, wherein said amount of a reinforcing filler of said first vulcanised elastomeric material comprises at least 20 phr of silica.

6. Tyre according to any one of the previous claims, wherein said inserts (104) are disposed substantially symmetrically with respect to the equatorial plane of said tyre.

7. Tyre according to any one of the previous claims, wherein each of said inserts (104) has a thickness not lower than 10% of a thickness of said tread band at an axial end of said tread band (106).

8. Tyre according to claim 7, wherein the thickness of each of said inserts (104) is comprised between 20% and 150% of the thickness of said tread band (106).

9. Tyre according to any one of the previous claims, wherein said at least two inserts (104) are linked together by a layer formed with said first vulcanised elastomeric material, so as to form a continuous layer radially interposed between said belt structure (105) and said tread band.

10. Tyre according to any one of the previous claims, wherein said belt structure (105) comprises at least a pair of lateral strips (105d) comprising reinforcing cords disposed substantially according to a direction parallel to the equatorial plane of said tyre, each strip of said pair of lateral strips (105d) being disposed at a respective axial end of said belt structure (105).

11. Tyre according to claim 10, wherein said at least two inserts (104) are respectively radially superimposed to said pair of lateral strips (105d).

12. Tyre according to claim 10 or claim 11, wherein said third belt layer (105c) of said belt structure (105) is at least partially radially superposed to said pair of lateral strips (105d).

13. Tyre according to any one of the previous claims, wherein said reinforcing cords of said carcass structure and of said belt structure (105) are metallic reinforcing cords.

14. Tyre according to claim 1, wherein said first elastomeric composition comprises an amount between 0.1 phr and 15 phr, preferably between 1 phr and 5 phr, of said N-alkyl pyrrolidone derivative having general formula (I).

## Patentansprüche

1. Reifen für Schwerlast-Fahrzeugräder, der umfasst:
• eine Karkassenstruktur umfassend zumindest eine Karkassenlage (101) umfassend Verstärkungskorde und mit Enden, die jeweiligen Wulststrukturen (111) zugeordnet;
• eine Gürtelstruktur (105), die an einer radial äußeren Position in Bezug auf die Karkassenstruktur angeordnet ist, wobei die Gürtelstruktur radial außerhalb umfasst:
- zumindest eine erste Gürtellage (105a) umfassend Verstärkungskorde, die in Übereinstimmung mit einer ersten Richtung angeordnet ist, die einen ersten Winkel in Bezug auf eine Äquatorialebene des Reifens bildet;
- zumindest eine zweite Gürtellage (105a) umfassend Verstärkungskorde, die in Übereinstimmung mit einer zweiten Richtung angeordnet ist, die einen zweiten Winkel in Bezug auf eine Äquatorialebene des Reifens bildet, wobei der zweite Winkel dem ersten Winkel entgegengesetzt ist;
- zumindest eine dritte Gürtellage (105c) umfassend Verstärkungskorde, die in Übereinstimmung mit einer dritten Richtung angeordnet ist, die einen dritten Winkel in Bezug auf eine Äquatorialebene des Reifens bildet, wobei der dritte Winkel zumindest 10° in absoluten Werten beträgt;
• einen Laufflächenring (106), der in Bezug auf die Gürtelstruktur in einer radial äußeren Position angelegt ist;
• zumindest zwei Einsätze (104), die zwischen jeweiligen axialen Enden der Gürtelstruktur (105) und des Laufflächenrings (106) angeordnet sind, wobei jeder der Einsätze einen ersten Abschnitt umfasst, der sich zu der Äquatorialebene des Reifens hin verjüngt, und einen zweiten Abschnitt, der zu einer Drehachse des Reifens hin verjüngt ist, wobei jeder der Einsätze mit einem ersten vulkanisierten Elastomermaterial ausgebildet ist, das ein Dienpolymer und eine Menge eines verstärkenden Füllstoffes umfasst,
**dadurch gekennzeichnet, dass**
die Menge des verstärkenden Füllstoffes zumindest 70% Silika umfasst und das erste vulkanisierte Elastomermaterial ausgehend von einer ersten Elastomerzusammensetzung gebildet ist, die ein N-Alkylpyrrolidon-Derivativ mit der allgemeinen Formel (I) umfasst: 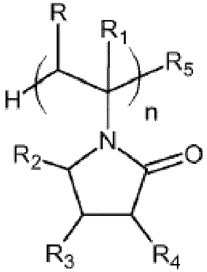
wobei R, R1, R2, R3, R4 und R5 gleich oder unterschiedlich sind und ein Wasserstoffatom oder eine Alkylgruppe C1-C20 darstellen, oder R und R1 miteinander verknüpft eine zyklische Struktur aus 5 oder 6 Kohlenstoffatomen bilden, oder aber R und R1 miteinander zur Bildung einer Doppelbindung kombiniert sind;
und wobei n gleich 1 ist oder, wenn es größer als 1 ist, eine Zahl an monomeren Einheiten des entsprechenden N-Alkylpyrrolidonpolymers darstellt.

2. Reifen nach Anspruch 1, wobei der Laufflächenring (106) mit einem zweiten vulkanisierten Elastomermaterial gebildet wird, das ein Dienpolymer und eine Menge eines verstärkenden Füllstoffes umfasst, und wobei die Menge eines verstärkenden Füllstoffes des zweiten vulkanisierten Elastomermaterials zumindest 70% Kohlenstoffruß enthält.

3. Reifen nach Anspruch 1 oder 2, wobei die Menge eines verstärkenden Füllstoffes des ersten Elastomermaterials höchstens 20% Kohlenstoffruß enthält.

4. Reifen nach einem der vorhergehenden Ansprüche, wobei die Menge eines verstärkenden Füllstoffes des ersten vulkanisierten Elastomermaterials zumindest 25 phr beträgt.

5. Reifen nach einem der vorhergehenden Ansprüche, wobei die Menge eines verstärkenden Füllstoffes des ersten vulkanisierten Elastomermaterials zumindest 20 phr Silika beträgt.

6. Reifen nach einem der vorhergehenden Ansprüche, wobei die Einsätze (104) im Wesentlichen symmetrisch in Bezug auf die Äquatorialebene des Reifens angeordnet sind.

7. Reifen nach einem der vorhergehenden Ansprüche, wobei jeder der Einsätze (104) eine Dicke von nicht weniger als 10 % einer Dicke des Laufflächenrings an einem axialen Ende des Laufflächenrings (106) aufweist.

8. Reifen nach Anspruch 7, wobei die Dicke eines jeden der Einsätze (104) zwischen 20 % und 150 % der Dicke des Laufflächenrings (106) liegt.

9. Reifen nach einem der vorhergehenden Ansprüche, wobei die zumindest zwei Einsätze (104) durch eine Lage verknüpft sind, die mit dem ersten vulkanisierten Elastomermaterial gebildet ist, um so eine durchgehende Lage zu bilden, die radial zwischen der Gürtelstruktur (105) und dem Laufflächenring angeordnet ist.

10. Reifen nach einem der vorhergehenden Ansprüche, wobei die Gürtelstruktur (105) zumindest ein Paar lateraler Streifen (105d) umfasst, die Verstärkungskorde umfassen, die im Wesentlichen in Übereinstimmung mit einer Richtung parallel zu der Äquatorialebene des Reifens angeordnet sind, wobei jeder Streifen des Paars lateraler Streifen (105d) an einem jeweiligen axialen Ende der Gürtelstruktur (105) angeordnet ist.

11. Reifen nach Anspruch 10, wobei die zumindest zwei Einsätze (104) jeweils radial über das Paar lateraler Streifen (105d) überlagert sind.

12. Reifen nach Anspruch 10 oder Anspruch 11, wobei die dritte Gürtellage (105c) der Gürtelstruktur (105) zumindest teilweise radial über das Paar lateraler Streifen (105d) überlagert ist.

13. Reifen nach einem der vorhergehenden Ansprüche, wobei die Verstärkungskorde der Karkassenstruktur und der Gürtelstruktur (105) metrallische Verstärkungskorde sind.

14. Reifen nach Anspruch 1, wobei die erste Elastomerzusammensetzung eine Menge zwischen 0,1 phr und 15 phr, vorzugsweise zwischen 1 phr und 5 phr, des N-Alkylpyrrolidon-Derivats mit der allgemeinen Formel (I) umfasst.

## Revendications

1. Pneu pour roues de poids lourds, comprenant :
• une structure de carcasse comprenant au moins un pli de carcasse (101) comprenant des câblés de renfort et ayant des extrémités associées à des structures de talon respectives (111) ;
• une structure de ceinture (105) disposée dans une position radialement externe par rapport à ladite structure de carcasse, ladite structure de ceinture radialement vers l'extérieur comprenant :
- au moins une première couche de ceinture (105a) comprenant des câblés de renfort disposés selon une première direction formant un premier angle par rapport à un plan équatorial du pneu ;
- au moins une deuxième couche de ceinture (105b) comprenant des câblés de renfort disposés selon une deuxième direction formant un deuxième angle par rapport au plan équatorial du pneu, ledit deuxième angle étant opposé audit premier angle ;
- au moins une troisième couche de ceinture (105c) comprenant des câblés de renfort disposés selon une troisième direction formant un troisième angle par rapport au plan équatorial du pneu, ledit troisième angle étant d'au moins 10° en valeur absolue ;
• une bande de roulement (106) disposée dans une position radialement externe par rapport à ladite structure de ceinture ;
• au moins deux inserts (104) disposés entre des extrémités axiales respectives de ladite structure de ceinture (105) et de ladite bande de roulement (106), chacun desdits inserts comprenant une première partie qui est effilée vers le plan équatorial dudit pneu et une deuxième partie qui est effilée vers un axe de rotation dudit pneu, chacun desdits inserts étant formé d'un premier matériau élastomère vulcanisé comprenant un polymère diénique et une quantité d'une charge renforçante,
**caractérisé en ce que**
ladite quantité de charge renforçante comprend au moins 70% de silice et ledit premier matériau élastomère vulcanisé est formé à partir d'une première composition élastomère comprenant un dérivé de N-alkylpyrrolidone ayant la formule générale (I) : 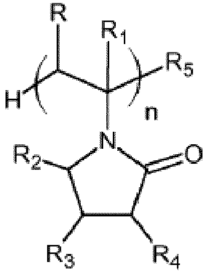
dans laquelle R, R₁, R₂, R₃, R₄ et R₅, étant identiques ou différents les uns des autres, représentent un atome d'hydrogène, ou un groupe alkyle en C₁ à C₂₀, ou R et R₁, liés ensemble, forment une structure cyclique de 5 ou 6 atomes de carbone ou encore, R et R₁ sont combinés ensemble pour former une double liaison ;
et dans laquelle n est égal à 1 ou, s'il est supérieur à 1, représente un nombre d'unités monomères du polymère de N-alkylpyrrolidone correspondant.

2. Pneu selon la revendication 1, dans lequel ladite bande de roulement (106) est formée d'un deuxième matériau élastomère vulcanisé comprenant un polymère diénique et une quantité d'une charge renforçante et où ladite quantité d'une charge renforçante dudit deuxième matériau élastomère vulcanisé comprend au moins 70% de noir de carbone.

3. Pneu selon la revendication 1 ou 2, dans lequel ladite quantité d'une charge renforçante dudit premier matériau élastomère comprend au plus 20% de noir de carbone.

4. Pneu selon l'une quelconque des revendications précédentes, dans lequel ladite quantité d'une charge renforçante dudit premier matériau élastomère vulcanisé est d'au moins 25 phr.

5. Pneu selon l'une quelconque des revendications précédentes, dans lequel ladite quantité d'une charge renforçante dudit premier matériau élastomère vulcanisé comprend au moins 20 phr de silice.

6. Pneu selon l'une quelconque des revendications précédentes, dans lequel lesdits inserts (104) sont disposés de manière essentiellement symétrique par rapport au plan équatorial dudit pneu.

7. Pneu selon l'une quelconque des revendications précédentes, dans lequel chacun desdits inserts (104) a une épaisseur non inférieure à 10% d'une épaisseur de ladite bande de roulement au niveau d'une extrémité axiale de ladite bande de roulement (106).

8. Pneu selon la revendication 7, dans lequel l'épaisseur de chacun desdits inserts (104) est comprise entre 20% et 150% de l'épaisseur de ladite bande de roulement (106).

9. Pneu selon l'une quelconque des revendications précédentes, dans lequel lesdits au moins deux inserts (104) sont liés ensemble par une couche formée dudit premier matériau élastomère vulcanisé, de manière à former une couche continue interposée radialement entre ladite structure de ceinture (105) et ladite bande de roulement.

10. Pneu selon l'une quelconque des revendications précédentes, dans lequel ladite structure de ceinture (105) comprend au moins une paire de bandes latérales (105d) comprenant des câblés de renfort disposés essentiellement selon une direction parallèle au plan équatorial dudit pneu, chaque bande de ladite paire de bandes latérales (105d) étant disposée au niveau d'une extrémité axiale respective de ladite structure de ceinture (105).

11. Pneu selon la revendication 10, dans lequel lesdits au moins deux inserts (104) sont superposés respectivement radialement à ladite paire de bandes latérales (105d).

12. Pneu selon la revendication 10 ou 11, dans lequel ladite troisième couche de ceinture (105c) de ladite structure de ceinture (105) est superposée de manière au moins partiellement radiale à ladite paire de bandes latérales (105d).

13. Pneu selon l'une quelconque des revendications précédentes, dans lequel lesdits câblés de renfort de ladite structure de carcasse et de ladite structure de ceinture (105) sont des câblés de renfort métalliques.

14. Pneu selon la revendication 1, dans lequel ladite première composition élastomère comprend une quantité comprise entre 0,1 phr et 15 phr, de préférence entre 1 phr et 5 phr, dudit dérivé de N-alkylpyrrolidone ayant la formule générale (I).
